(19) Europäisches Patentamt / European Patent Office / Office européen des brevets

(11) **EP 2 993 640 A1**

(12) **EUROPEAN PATENT APPLICATION**

(43) Date of publication:
09.03.2016 Bulletin 2016/10

(51) Int Cl.:
*G06Q 50/06* [(2012.01)]

(21) Application number: 15178357.8

(22) Date of filing: 24.07.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 08.09.2014 EP 14183941

(71) Applicant: **Siemens Aktiengesellschaft
80333 München (DE)**

(72) Inventors:
• **Lehmann, Thomas
91052 Erlangen (DE)**
• **Reinschke, Johannes
90425 Nürnberg (DE)**

(74) Representative: **Maier, Daniel Oliver
Siemens AG
Postfach 22 16 34
80506 München (DE)**

(54) **POWER MANAGEMENT SYSTEM**

(57) Power management system. A planning module for a power mana-gement apparatus wherein the planning module reads a set of parameters, wherein the set of parameters comprises base load due to the infrastructure at the site, and a variable load at the site, wherein the parameters of the variable load also comprises technical constraints applicable to the variable load, wherein the set of parameters comprises a tariff describing the cost of the procurement of energy, wherein the planning module applies a mixed-integer algorithm to obtain and to output a load profile for the site, wherein the planning module applies the mixed-integer algorithm to obtain and to output values of flexibility for the site, wherein the planning module obtains an optimum schedule for the at least one variable load such that a cost function for the procurement of energy is minimized and the optimum schedule complies with said technical constraints.

FIG 2

EP 2 993 640 A1

**Description**

Background

The present disclosure relates to an improved power management system.

Large commercial buildings often provide a system for building automation. A building automation system is, in general, made up of several layers. A management layer 1 provides high-level functionality such as visualization 2, 3, 4 of the infrastructure of a building. An automation layer 5 groups individual devices 6, 7, 8, 9 and controls groups 10, 11 of devices. A field layer 12 of a building automation system acts to connect the various components 13 of the infrastructure of a building to the automation layer.

An energy management system generally is part of a building automation system. Power management systems may be employed at residential, at commercial, or at industrial sites. The core functionality of an energy management system is energy-efficient control of the various components connected to the system. Energy management has indeed become crucial in the present political and economic climate. An energy management apparatus also provides protection against overload conditions. In addition, energy management systems aim for a reduction in greenhouse gas emissions. Also, certification under relevant standards such as Leadership in Energy and Environmental Design (LEED), Energy Star etc is available for energy management systems.

A building automation apparatus may further comprise a power management apparatus. Actually, the power management apparatus may be part of the energy management apparatus of a building. A power management apparatus typically is part of the management layer of a building automation system. A power management apparatus acts to coordinate supply and demand of power. Coordination of supply and demand applies to renewable sources of energy such as photovoltaic installations, storage of electric energy, and variable loads such as electric cars.

Comprehensive power management also provides metering, monitoring of infrastructure, data analysis, as well as forecast of supply and demand. A power management apparatus also balances supply and demand of power. In doing so, a power management apparatus may also account for incentives provided by the energy market.

In the future, balance of supply and demand is going to involve participation in energy markets. In central Europe, Germany, Austria, Switzerland, Belgium, the Netherlands and Denmark have already joined the German reserves market.

By contrast, a plurality of energy markets has been established in Northern Europe. On a derivative market, financial derivatives such as forwards, swaps and options in relation to underlying energy assets such as oil, gas, and electricity, may be exchanged. A day-ahead market serves to trade energy for the next 24 hours. In the short term, energy for the immediate future may be procured or sold on an intraday market. Typical intervals are as short as 15 minutes. Further, a reserves market deals with the capacities of spinning and of non-spinning reserves. Also, markets are available to cover automated disturbance response.

There are, in principle, several options for access to energy markets. Basically, participation in energy markets may involve direct as well as indirect participation. Both the Northern European and the Central European energy markets require minimum quantities of supply and of demand. A single industrial or commercial site will normally not be able to match those minimum quantities. For this reason, even a large industrial or commercial site will at present hardly meet the minimum requirements for direct participation in energy markets.

Access is, however, made possible indirectly through energy aggregators. Energy aggregators combine the sources and the loads of more than one electricity account with the goal of providing access to the electricity market. In particular, aggregators ensure the minimum requirements for participation in energy markets are met. Electric utilities or clusters of distributed generation installations may, for instance, act as energy aggregators. The latter are commonly referred to as virtual power plants.

Discrepancies between forecast values and actual generation are another issue for power management systems. The issue is known as particularly relevant in conjunction with photovoltaic installations.

The patent application US2011/087904A1 was published on 14 April 2011. US2011/087904A1 teaches a smart power management system and a method thereof.

The aim of the present disclosure is at least to mitigate the aforementioned difficulties and to optimize a power management apparatus in view of today's energy markets.

Summary

The present disclosure is based on the discovery that the use of a (mixed-integer) optimization algorithm may improve on the power management of a building. An optimization algorithm allows for a planning module of a power management apparatus that dynamically factors in various loads and various sources of energy.

The power management apparatus as per this disclosure shall provide an accurate forecast of on-site power generation and of on-site power consumption through non-variable loads.

The power management apparatus shall also optimize procurement of energy by scheduling variable loads and energy storage devices. Variable sources may also be scheduled and provide reactive power as necessary. Further, scheduling of variable loads may curtail the active power required by such loads. As a result of optimized scheduling, the nominal load profile of a building as measured at the point of common coupling will be forecast. Further, the power management apparatus will forecast the flexibility and the technical limits of deviations from the scheduled load profile.

The power management apparatus shall also provide measures that allow a building to stay within the limits of its nominal load profile in spite of unforeseen disturbances. The weather around a building may, for instance, deviate from the forecast. Power generation will consequently deviate from its scheduled value. The measures taken in response to such events will hereinafter be referred to as online power management. They typically take up some of the flexibility as determined previously by the power management apparatus.

The power management apparatus as per this disclosure shall also function to provide automated participation in the energy market. The power management apparatus shall, in particular, market the remaining flexibility of a load.

The above problems are resolved by a power management apparatus according to the main claim(s) of this disclosure. Preferred embodiments of the present disclosure are covered by the dependent claims.

It is a further object of this disclosure to provide a power management apparatus with functionality to carry out stress tests. A power management apparatus may capitalize on a stress test to assess the reliability of an anticipated load profile under various stresses. The temperature outside a building may, for instance, rise by several degrees Celsius. Consequently, less energy will be required for heating and the demand for power will drop. A power management apparatus may also run a stress test to analyse repercussions of various scenarios on the stability of a power grid inside and outside a building.

It is a further object of this disclosure to provide a residential, commercial and/or industrial building with a power management apparatus.

Brief description of the drawings

Various features will become apparent to those skilled in the art from the following detailed description of the disclosed non-limiting embodiments. The drawings that accompany the detailed description can be briefly described as follows:

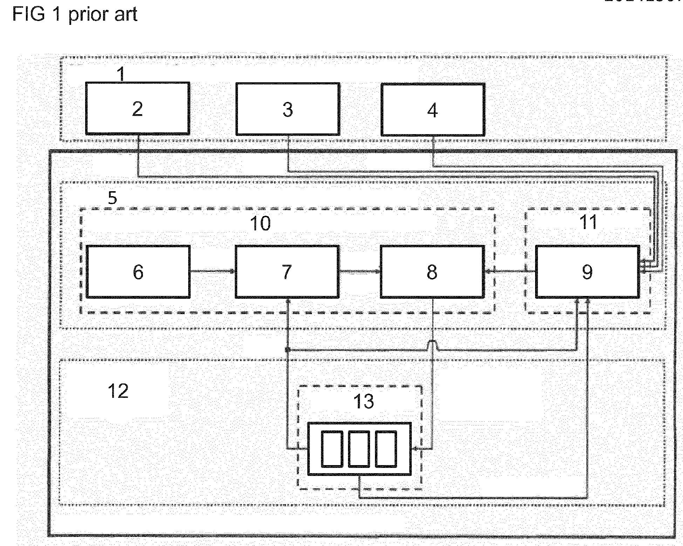

FIG 1 is a block diagram providing a general overview of the components of the building automation apparatus.

FIG 2 depicts the maximum flexibility of a particular storage unit.

Detailed description

A power management apparatus as per this disclosure delivers

- forecast values for procurement of energy from the market,

- scheduled operation of every variable load or source that is integrated into the power management apparatus, and

- flexibility of variable loads and sources in view of participation in energy markets.

It should be mentioned that loads and load profiles may be positive or negative. Positive loads and positive load profiles relate to positive energy intake of building. Negative loads and negative load profiles refer to feeding power into the grid.

The forecast values of energy to be procured are closely related to the load profile of a building. Variable loads and variable sources are typically components of infrastructure. Technical constraints and boundary conditions for comfort are factored in when scheduling variable loads and variable sources of power. An assessment of the flexibility of the variable components of infrastructure usually also involves an assessment of uncertainties in the forecast.

In other words, the planning module of the present disclosure is configured to acquire and to output load profiles of variable loads and/or of a site. Load profiles of variable loads typically are load profiles of individual components of infrastructure. The load profile of a site typically is a sum of load profiles of variable loads and of the base load of a site.

The planning module of the instant disclosure preferably is configured to communicate with other components of a building management apparatus. The planning module is yet more preferably configured to communicate with components that are part of the automation layer 5 of a building management apparatus. The planning module may, by way of non-limiting example, compute a load profile and send the same profile to the automation layer 5 of a building automation system. The automation layer 5 then supplies power or stops supply of power to at least one component 13 of the field layer 12.

In an alternate embodiment, the planning module may, by way of non-limiting example, compute a load provide and send the same profile to the field layer 12 of a building management apparatus. The components 13 of the field layer 12 then control their own operation in accordance with the load profile sent by the planning module. It is envisaged that the components 13 of the field layer 13 adjust their own power consumption in accordance with the load profile.

In the context of the present disclosure, flexibility is defined as a technically viable deviation of actual load from a scheduled load profile. A deviation from a scheduled load profile may be positive due to an increase in load or negative due to a decrease in load. Should the generation at a particular site exceed load, the building may actually supply energy to the power grid. Typically, deviations between scheduled load and actual load are measured at the point of common coupling. The power management apparatus as per this disclosure delivers values of flexibility for any given interval of time. These flexibility values meet the technical and/or the comfort constraints of the system.

The present disclosure deals with a planning module of a power management apparatus that harnesses physical and/or empirical models of building infrastructure. The planning module as disclosed herein also relies on information on the infrastructure of a building. It may, by way of non-limiting example, factor in the following components of building infrastructure:

- Electrical storage of energy,

- renewable sources of energy such as photovoltaic installations,

- variable electric loads such as electric vehicles to be charged,

- variable thermal loads such as water boilers, heating, ventilation, air-conditioning installations, hot and cold water storage tanks,

- other apparatuses for energy conversion such as heat pumps, cogeneration units, fuel cells, in particular solid oxide fuel cells and polymer electrolyte membrane fuel cells, flow batteries. Suitable flow batteries comprise, by way of non-limiting example, hydrogen-lithium bromated batteries, hydrogen-lithium chlorate batteries, bromine-hydrogen batteries, iron-tin batteries, iron-titanium batteries, iron-chrome batteries, vanadium-vanadium (sulphate) batteries, vanadium-vanadium (bromide) batteries, sodium-bromine polysulfide batteries, zinc-bromine batteries, lead-acid (methanesulfonate) batteries and / or zinc-cerium (methanesulfonate) batteries. Suitable flow batteries may also comprise organic flow batteries such as batteries based on quinones.

The above list is not exhaustive.

In addition, models about building infrastructure may rely on the following parameters:

- Technical parameters of components connected to the system such as the maximum storage capacity of an electric battery,

- (dynamically updated) indications of prices as determined by a utility supply contract,

- quantitative forecasts of non-controllable parameters such as base load of a building and incident solar radiation.

The planning module of this disclosure can on the one hand indicate the minimum flexibility of a building for decreasing or for increasing its demand for energy. Values of flexibility commonly relate to time slots. On the German reserves market, time slots cover four hours. The planning module of this disclosure can on the other hand deliver time-continuous values of maximum flexibility. In doing so, the planning module may factor in uncertainties in the forecast of power generation. Photovoltaic generation may, for instance, exceed its scheduled value.

A mixed-integer optimization algorithm is employed to technically implement the planning module disclosed herein. This algorithm relies on a plurality of input parameters to find a solution that represents a global optimum. The present disclosure applies a mixed-integer optimization algorithm to a building with

- a photovoltaic installation,

- an electric storage,

- a base load of the building,

- an air-conditioning installation that allows adjustment of indoor temperature, relative humidity, concentration of carbon dioxide etc.,

- a thermal load to be switched on and off,

- a charging point for electric cars. A charging point is sometimes also referred to as an EVSE (electric vehicle supply equipment).

The above list is not exhaustive.

In the present context, quantities that may be set by an operator or may be set during commissioning are considered parameters. The planning module according to this disclosure is configured to acquire sets of such parameters. That is, the planning module is configured to read one or several parameters. These parameters may relate to the base load of a building and to the various variable loads.

Quantities to be derived by a planning module of a power management apparatus are considered variables.

The table below gives an overview of typical parameters and of typical variables to be used by the mixed-integer optimization algorithm.

| symbol | description | type : P = parameter V = variable |
|---|---|---|
| T | Time horizon of planning period | P |
| $\Delta t$ | Time resolution of planning calculation | P |
| $\overline{P}_t^{PV}$ | Maximum power generated by PV system in time interval t | P |
| $0 \le P_t^{PV} \le \overline{P}_t^{PV}$ | Power generated by the PV system in time interval t | V |
| $\overline{Q}^{PV}$ | Maximum reactive power of PV system | P |
| $\underline{Q}^{PV}$ | Minimum reactive power of PV system | P |
| $\underline{Q}^{PV} \le Q_t^{PV} \le \overline{Q}^{PV}$ | Reactive power of PV system in time interval t | V |
| $E_0^S$ | Initial energy level of storage | P |
| $E_T^S$ | Final energy level of storage | P |
| $\overline{E}^S E$ | Maximum storage capacity | P |
| $\overline{P}^{S,IN}$ | Maximum charging power of storage | P |
| $\overline{P}^{S,OUT}$ | Maximum discharging power of storage | P |
| $\eta^{S,IN}$ | Rate of efficiency for charging | P |
| $\eta^{S,OUT}$ | Rate of efficiency for discharging | P |
| $0 \le E_t^S \le \overline{E}^S$ | Energy level of storage in time interval t | V |
| $0 \le P_t^{S,OUT} \le \overline{P}^{S,OUT}$ | Discharging power of storage in time interval t | V |
| $0 \le P_t^{S,IN} \le \overline{P}^{S,IN}$ | Charging power of storage in time interval t | V |
| $\overline{Q}^S$ | Maximum reactive power of storage system | P |
| $\underline{Q}^S$ | Minimum reactive power of storage system | P |

(continued)

| symbol | description | type : P = parameter V = variable |
|---|---|---|
| $\underline{Q}^S \le Q_t^S \le \overline{Q}^S$ | Reactive power of storage system in time interval t | V |
| $P_t^B$ | Building base load in time interval t | P |
| $0 \le P_t^G$ | Power drawn from grid in time interval t | V |
| $\overline{Q}^G$ | Maximum reactive power to be drawn from grid | P |
| $\underline{Q}^G$ | Minimum reactive power to be drawn from grid | P |
| $\underline{Q}^G \le Q_t^G \le \overline{Q}^G$ | Reactive power drawn from grid in time interval t | V |
| $0 \le P_{\max}^G$ | Maximum grid power above estimate | V |
| $P_{\max}^{G,Estimate}$ | Estimate of maximum grid power | P |
| $c_t^G$ | Energy price (Euro per kWh) in time interval t | P |
| $c_{\max}^G$ | Peak load charge (Euro per kW per month / year) | P |
| $0 \le P_t^{PV,Flex,+}$ | Flexibility of PV system to provide positive balancing power in time interval t | V |
| $0 \le P_t^{PV,Flex,-}$ | Flexibility of PV system to provide negative balancing power in time interval t | V |
| $0 \le P_t^{S,Flex,+}$ | Flexibility of storage system to provide positive balancing power in time interval t | V |
| $0 \le P_t^{S,Flex,-}$ | Flexibility of storage system to provide negative balancing power in time interval t | V |
| $0 \le E_t^{S,Flex,+} \le \overline{E}^S$ | Energy level of storage for positive balancing power supply in time interval t | V |
| $0 \le E_t^{S,Flex,-} \le \overline{E}^S$ | Energy level of storage for negative balancing power supply in time interval t | V |
| $0 \le P_\tau^{Flex,+}$ | Positive balancing power offered for time interval $\tau$ | |
| $0 \le P_\tau^{Flex,-}$ | Negative balancing power offered for time interval $\tau$ | V |
| $\overline{P}^{HVAC,j}$ | Maximum power consumption of energy source j of HVAC system | P |
| $\underline{P}^{HVAC,j}$ | Minimum power consumption of energy source j of HVAC system | P |
| $\underline{P}^{HVAC,j} \le P_t^{HVAC,j} \le \overline{P}^{HVAC,j}$ | Power consumption of energy source j of HVAC system in time interval t | V |
| $\overline{Q}^{HVAC}$ | Maximum reactive power of HVAC system | P |

(continued)

| symbol | description | type : P = parameter V = variable |
|---|---|---|
| $\underline{Q}^{HVAC}$ | Minimum reactive power of HVAC system | P |
| $\underline{Q}^{HVAC} \leq Q_t^{HVAC} \leq \overline{Q}^{HVAC}$ | Reactive power of HVAC system in time interval t | V |
| $A_t^{HVAC,P}$ | Coefficient matrix in HVAC model for HVAC power consumption in time interval t | P |
| $A_t^{HVAC,In\_Temp,Measure}$ | Coefficient matrix in HVAC model for indoor temperature measurement in time interval t | P |
| $A_t^{HVAC,In\_Temp,T\arg et}$ | Coefficient matrix in HVAC model for target indoor temperature in time interval t | P |
| $A_t^{HVAC,Out\_Temp,Measure}$ | Coefficient matrix in HVAC model for outdoor temperature measurement in time interval t | P |
| $A_t^{HVAC,x\_rel,Measure}$ | Coefficient matrix in HVAC model for relative humidity measurement in time interval t | P |
| $A_t^{HVAC,x\_rel,T\arg et}$ | Coefficient matrix in HVAC model for target relative humidity in time interval t | P |
| $A_t^{HVAC,c\_CO2,Measure}$ | Coefficient matrix in HVAC model for CO2 concentration measurement in time interval t | P |
| $A_t^{HVAC,c\_CO2,T\arg et}$ | Coefficient matrix in HVAC model for target CO2 concentration in time interval t | P |
| $b_t^{HVAC}$ | Vector of constants in HVAC model | P |
| $\underline{T}^{In}$ | Minimum indoor temperature | P |
| $\overline{T}^{In}\ T$ | Maximum indoor temperature | P |
| $\underline{T}^{In} \leq T_t^{In,Measure} \leq \overline{T}^{In}$ | Indoor temperature measurement in time interval t | V |
| $T_t^{In,T\arg et}$ | Target indoor temperature in time interval t | V |
| $T_t^{Out,Measure}$ | Outdoor temperature measurement in time interval t | P |
| $\underline{x}^{rel}$ | Minimum relative humidity | P |
| $\overline{x}^{rel}$ | Maximum relative humidity | P |
| $\underline{x}^{rel} \leq x_t^{rel,Measure} \leq \overline{x}^{rel}$ | Relative humidity measurement in time interval t | V |
| $x_t^{rel,T\arg et}$ | Target relative humidity in time interval t | V |
| $\underline{c}^{CO2}$ | Minimum CO2 concentration | P |
| $\overline{c}^{CO2}$ | Maximum CO2 concentration | P |
| $\underline{c}^{CO2} \leq c_t^{CO2,Measure} \leq \overline{c}^{CO2}$ | CO2 concentration measurement in time interval t | V |

| symbol | description | type : P = parameter V = variable |
|---|---|---|
| $c_t^{CO2,Target}$ | Target air flow in time interval t | V |
| $0 \leq P_t^{HVAC,Flex,+}$ | Flexibility of HVAC system for providing positive balancing power system in time interval t | V |
| $\underline{T}^{In} \leq T_t^{In,Measure,Flex,+} \leq \overline{T}^{In}$ | Indoor temperature measurement in time interval t for providing positive balancing power | V |
| $T_t^{In,Target,Flex,+}$ | Target indoor temperature in time interval t for providing positive balancing power | V |
| $\underline{x}^{rel} \leq x_t^{rel,Measure,Flex,+} \leq \overline{x}^{rel}$ | Relative humidity measurement (for positive balancing power) in time interval t | V |
| $x_t^{rel,Target,Flex,+}$ | Target relative humidity in time interval t for providing positive balancing power | V |
| $\underline{c}^{CO2} \leq c_t^{CO2,Measure,Flex,+} \leq \overline{c}^{CO2}$ | CO2 concentration measurement in time interval t for providing positive balancing power | V |
| $c_t^{CO2,Target,Flex,+}$ | Target CO2 concentration in time interval t for providing positive balancing power | V |
| $0 \leq P_t^{HVAC,Flex,-}$ | Flexibility of HVAC system for providing negative balancing power system in time interval t | V |
| $\underline{T}^{In} \leq T_t^{In,Measure,Flex,-} \leq \overline{T}^{In}$ | Indoor temperature measurement in time interval t for providing negative balancing power | V |
| $T_t^{In,Target,Flex,-}$ | Target indoor temperature in time interval t for providing negative balancing power | V |
| $\underline{x}^{rel} \leq x_t^{rel,Measure,Flex,-} \leq \overline{x}^{rel}$ | Relative humidity measurement (for providing negative balancing power) in time interval t | V |
| $x_t^{rel,Target,Flex,-}$ | Target relative humidity in time interval t for providing negative balancing power | V |
| $\underline{c}^{CO2} \leq c_t^{CO2,Measure,Flex,-} \leq \overline{c}^{CO2}$ | CO2 concentration measurement in time interval t for providing negative balancing power | V |
| $c_t^{CO2,Target,Flex,-}$ | Target CO2 concentration in time interval t for providing negative balancing power | V |
| $P^{STL}$ | Fixed power consumption of switchable thermal load | P |
| $x_t^{STL}$ | Switch turning thermal load in time interval t on or off | V |
| $\underline{T}^{STL}$ | Minimum temperature of thermal load | P |
| $\overline{T}^{STL}\, T$ | Maximum temperature of thermal load | P |
| $\underline{T}^{STL} \leq T_t^{STL} \leq \overline{T}^{STL}$ | Temperature of thermal load in time interval t | V |
| $a^{STL,P}$ | Coefficient for power - temperature - relation of thermal load in time interval t | P |

(continued)

| symbol | description | type : P = parameter V = variable |
|---|---|---|
| $a^{STL,P}$ | Coefficient for temperature - temperature - relation of thermal load in time interval t | P |
| $b^{STL}$ | Constant for thermal load model in time interval t | P |
| $\underline{T}^{STL} \leq T_t^{STL,Flex,+} \leq \overline{T}^{STL}$ | Temperature of thermal load in time interval t for providing positive balancing power | V |
| $0 \leq P_t^{STL,Flex,+}$ | Flexibility of switchable thermal load in time interval t on or off for providing positive balancing power | V |
| $x_t^{STL,Flex,+}$ | Flag for positive balancing power in time interval t | V |
| $\underline{T}^{STL} \leq T_t^{STL,Flex,-} \leq \overline{T}^{STL}$ | Temperature of thermal load in time interval t for providing negative balancing power | V |
| $0 \leq P_t^{STL,Flex,-}$ | Flexibility of switchable thermal load in time interval t for providing negative balancing power | V |
| $x_t^{STL,Flex,-}$ | Flag for negative balancing power in time interval t | V |
| $\overline{Q}^{STL}$ | Maximum reactive power of switchable thermal load | P |
| $\underline{Q}^{STL}$ | Minimum reactive power of switchable thermal load | P |
| $\underline{Q}^{STL} \leq Q_t^{STL} \leq \overline{Q}^{STL}$ | Reactive power of switchable thermal load in time interval t | V |
| $\overline{E}_k^{EV}$ | Energy demand of electric vehicle k | P |
| $\overline{P}^{EVSE}$ | Maximum charging power of EVSE | P |
| $\underline{P}^{EVSE}$ | Minimum charging power of EVSE | P |
| $0 \leq P_{t,k}^{EV} \leq \overline{P}^{EVSE}$ | Charging power of electric vehicle k in time interval t | V |
| $P_{t,k}^{EV,Flex,+}$ | Flexibility for providing positive balancing power in time interval t due to charging of electric vehicle k (might be negative) | V |
| $x_{t,k}^{EV,Flex,+}$ | Switch for additionally charging electric vehicle k in time interval t due to providing positive balancing power | V |
| $P_{t,k}^{EV,Flex,-}$ | Flexibility for providing negative balancing power in time interval t due to charging of electric vehicle k (might be negative) | V |
| $x_{t,k}^{EV,Flex,-}$ | Switch for not charging electric vehicle k in time interval t due to providing negative balancing power | V |
| $\eta^{EVSE}$ | Efficiency of EVSE | P |
| $x_{t,k}^{EV}$ | Switch for charging electric vehicle k in time interval t | V |
| $n^{EVSE}$ | Number of EVSEs | P |
| $\underline{t}_k$ | Arrival time of electric vehicle k | P |

(continued)

| symbol | description | type : P = parameter V = variable |
|---|---|---|
| $\overline{t}_k$ | Departure time of electric vehicle k | P |
| $\overline{P}$EVSE,Total | Maximum connection power of all charging stations | P |
| $\overline{Q}$EVSE | Maximum reactive power of EVSE | P |
| $\underline{Q}$EVSE | Minimum reactive power of EVSE | P |
| $$\underline{Q}^{EVSE} \leq Q_t^{EVSE} \leq \overline{Q}^{EVSE}$$ | Reactive power of EVSE in time interval t | V |

The storage system of the investigated building may be described by the following relationships:

The storage balance is expressed as

$$\frac{1}{\eta^{S,OUT}} P_t^{S,OUT} \Delta t - \eta^{S,IN} P_t^{S,IN} \Delta t + E_t^S = E_{t-1}^S, \quad \forall t \quad .$$

For positive balancing power, the flexibility of storage reads

$$\frac{1}{\eta^{S,OUT}} \left( P_t^{S,OUT} + P_t^{S,Flex,+} \right) \Delta t - \eta^{S,IN} P_t^{S,IN} \Delta t + E_t^{S,Flex,+} = E_{t-1}^{S,Flex,+}, \quad \forall t$$

whereas for negative balancing power the flexibility of storage is

$$\frac{1}{\eta^{S,OUT}} P_t^{S,OUT} \Delta t - \eta^{S,IN} \left( P_t^{S,IN} + P_t^{S,Flex,-} \right) \Delta t + E_t^{S,Flex,-} = E_{t-1}^{S,Flex,-}, \quad \forall t \quad .$$

Maximum charging of storage with respect to negative balancing power yields the condition

$$P_t^{S,IN} + P_t^{S,Flex,-} \leq \overline{P}^{S,IN} .$$

For positive balancing power, a similar condition is obtained

$$P_t^{S,OUT} + P_t^{S,Flex,+} \leq \overline{P}^{S,OUT} .$$

The photovoltaic system of the investigated building may be described by the following relationships:

The flexibility of a photovoltaic system for negative balancing power demands

$$0 \leq P_t^{PV} - P_t^{PV,Flex,-} \leq \overline{P}_t^{PV} .$$

Likewise, the flexibility of a photovoltaic system for positive balancing power demands

$$0 \leq P_t^{PV} + P_t^{PV,Flex,+} \leq \overline{P}_t^{PV} \quad .$$

The heating, air-conditioning, ventilation system and/or similar loads of the investigated building may be described by the model equations as set out below. It seems worth stressing that bilinear terms in these equations may be reformulated as large M-constraints:

$$
\begin{pmatrix} P_t^{HVAC,j} \\ T_t^{In,Measure} \\ x_t^{rel,Measure} \\ c_t^{CO2,Measure} \end{pmatrix} =
\begin{bmatrix} A_t^{HVAC,P} \\ A_t^{HVAC,In\_Temp,Measure} \\ A_t^{HVAC,In\_Temp,T\arg et} \\ A_t^{HVAC,Out\_Temp,Measure} \\ A_t^{HVAC,x\_rel,Measure} \\ A_t^{HVAC,x\_rel,T\arg et} \\ A_t^{HVAC,c\_CO2,Measure} \\ A_t^{HVAC,c\_CO2,T\arg et} \end{bmatrix}
\begin{bmatrix} \begin{pmatrix} P_{t-1}^{HVAC,j} \\ \dots \\ P_{t-n}^{HVAC,j} \end{pmatrix} \\ \begin{pmatrix} T_{t-1}^{In,Measure} \\ \dots \\ T_{t-m}^{In,Measure} \end{pmatrix} \\ \begin{pmatrix} T_{t-1}^{In,T\arg et} \\ \dots \\ T_{t-m}^{In,T\arg et} \end{pmatrix} \\ \begin{pmatrix} T_{t-1}^{Out,Measure} \\ \dots \\ T_{t-m}^{Out,Measure} \end{pmatrix} \\ \begin{pmatrix} x_{t-1}^{rel,Measure} \\ \dots \\ x_{t-m}^{rel,Measure} \end{pmatrix} \\ \begin{pmatrix} x_{t-1}^{rel,T\arg et} \\ \dots \\ x_{t-m}^{rel,T\arg et} \end{pmatrix} \\ \begin{pmatrix} c_{t-1}^{CO2,Measure} \\ \dots \\ c_{t-m}^{CO2,Measure} \end{pmatrix} \\ \begin{pmatrix} c_{t-1}^{CO2,T\arg et} \\ \dots \\ c_{t-m}^{CO2,T\arg et} \end{pmatrix} \end{bmatrix} + b_t^{HVAC}
$$

Flexibility of a heating, air-conditioning and ventilation system for positive balancing power requires

$$
\begin{pmatrix} P_t^{HVAC,j} - P_t^{HVAC,Flex,+} \\ T_t^{In,Measure} \\ x_t^{rel,Measure} \\ c_t^{CO2,Measure} \end{pmatrix} = \begin{bmatrix} A_t^{HVAC,P} \\ A_t^{HVAC,In\_Temp,Measure} \\ A_t^{HVAC,In\_Temp,T\arg et} \\ A_t^{HVAC,Out\_Temp,Measure} \\ A_t^{HVAC,x\_rel,Measure} \\ A_t^{HVAC,x\_rel,T\arg et} \\ A_t^{HVAC,c\_CO2,Measure} \\ A_t^{HVAC,c\_CO2,T\arg et} \end{bmatrix} \begin{bmatrix} \begin{pmatrix} P_{t-1}^{HVAC,j} - P_{t-1}^{HVAC,Flex,+} \\ \dots \\ P_{t-n}^{HVAC,j} - P_{t-n}^{HVAC,Flex,+} \end{pmatrix} \\ \begin{pmatrix} T_{t-1}^{In,Measure,Flex,+} \\ \dots \\ T_{t-m}^{In,Measure,Flex,+} \end{pmatrix} \\ \begin{pmatrix} T_{t-1}^{In,T\arg et,Flex,+} \\ \dots \\ T_{t-m}^{In,T\arg et,Flex,+} \end{pmatrix} \\ \begin{pmatrix} T_{t-1}^{Out,Measure} \\ \dots \\ T_{t-m}^{Out,Measure} \end{pmatrix} \\ \begin{pmatrix} x_{t-1}^{rel,Measure,Flex,+} \\ \dots \\ x_{t-m}^{rel,Measure,Flex,+} \end{pmatrix} \\ \begin{pmatrix} x_{t-1}^{rel,T\arg et,Flex,+} \\ \dots \\ x_{t-m}^{rel,T\arg et,Flex,+} \end{pmatrix} \\ \begin{pmatrix} c_{t-1}^{CO2,Measure,Flex,+} \\ \dots \\ c_{t-m}^{CO2,Measure,Flex,+} \end{pmatrix} \\ \begin{pmatrix} c_{t-1}^{CO2,T\arg et,Flex,+} \\ \dots \\ c_{t-m}^{CO2,T\arg et,Flex,+} \end{pmatrix} \end{bmatrix} + b_t^{HVAC} \quad .
$$

The same condition for negative balancing power reads

$$\begin{pmatrix} \sum_j P_t^{HVAC,j} + P_t^{HVAC,Flex,-} \\ T_t^{In,Measure} \\ x_t^{rel,Measure} \\ c_t^{CO2,Measure} \end{pmatrix} = \begin{bmatrix} A_t^{HVAC,P} \\ A_t^{HVAC,In\_Temp,Measure} \\ A_t^{HVAC,In\_Temp,T\arg et} \\ A_t^{HVAC,Out\_Temp,Measure} \\ A_t^{HVAC,x\_rel,Measure} \\ A_t^{HVAC,x\_rel,T\arg et} \\ A_t^{HVAC,c\_CO2,Measure} \\ A_t^{HVAC,c\_CO2,T\arg et} \end{bmatrix} \begin{bmatrix} \begin{pmatrix} P_{t-1}^{HVAC,j} - P_{t-1}^{HVAC,Flex,-} \\ \dots \\ P_{t-n}^{HVAC,j} - P_{t-n}^{HVAC,Flex,-} \end{pmatrix} \\ \begin{pmatrix} T_{t-1}^{In,Measure,Flex,-} \\ \dots \\ T_{t-m}^{In,Measure,Flex,-} \end{pmatrix} \\ \begin{pmatrix} T_{t-1}^{In,T\arg et,Flex,-} \\ \dots \\ T_{t-m}^{In,T\arg et,Flex,-} \end{pmatrix} \\ \begin{pmatrix} T_{t-1}^{Out,Measure} \\ \dots \\ T_{t-m}^{Out,Measure} \end{pmatrix} \\ \begin{pmatrix} x_{t-1}^{rel,Measure,Flex,-} \\ \dots \\ x_{t-m}^{rel,Measure,Flex,-} \end{pmatrix} \\ \begin{pmatrix} x_{t-1}^{rel,T\arg et,Flex,-} \\ \dots \\ x_{t-m}^{rel,T\arg et,Flex,-} \end{pmatrix} \\ \begin{pmatrix} c_{t-1}^{CO2,Measure,Flex,-} \\ \dots \\ c_{t-m}^{CO2,Measure,Flex,-} \end{pmatrix} \\ \begin{pmatrix} c_{t-1}^{CO2,T\arg et,Flex,-} \\ \dots \\ c_{t-m}^{CO2,T\arg et,Flex,-} \end{pmatrix} \end{bmatrix} + b_t^{HVAC}$$

.

The thermal load to be switched on and off of the investigated building may be described by the below equations. Once again, bilinear terms in these equations may be reformulated as large M-constraints.

The thermal model in this case reads

$$T_t^{STL} = a^{STL,P} x_t^{STL} P^{STL} + a^{STL,T} T_{t-1}^{STL} + b^{STL}, \quad \forall t$$

.

In addition, flexibility for providing positive power yields

$$x_t^{STL,Flex,+} = 1 \Rightarrow x_t^{STL} = 1, \quad \forall t$$

$$x_t^{STL,Flex,+} = 1 \Rightarrow T_t^{STL,Flex,+} = a^{STL,T} T_{t-1}^{STL,Flex,+} + b^{STL}, \quad \forall t$$

$$P_t^{STL,Flex,+} \leq x_t^{STL,Flex,+} P^{STL}. \quad \forall t$$

Likewise, flexibility for providing negative power implies

$$x_t^{STL,Flex,-} = 1 \Rightarrow x_t^{STL} = 0, \quad \forall t$$

$$x_t^{STL,Flex,-} = 1 \Rightarrow T_t^{STL,Flex,-} = a^{STL,P} P^{STL} + a^{STL,T} T_{t-1}^{STL,Flex,-} + b^{STL}, \quad \forall t$$

$$P_t^{STL,Flex,-} \leq x_t^{STL,Flex,-} P^{STL}.$$

The below relationships describe the charging of electric vehicles and also other loads suitable for scheduling. Let k be a natural number or zero. The process of charging the k-th electric vehicle can then be described by

$$\sum_t \eta^{EVSE} P_{t,k}^{EV} \Delta t \geq \overline{E}_k^{EV}, \quad \forall k$$

Let nEVSE be the maximum number of electric vehicle supply equipments (EVSEs). The corresponding constraint then reads

$$\sum_k x_{t,k}^{EV} \leq n^{EVSE}, \quad \forall t$$

In addition, minimum and maximum charging power need to be considered:

$$x_{t,k}^{EV} \underline{P}^{EVSE} \leq P_{t,k}^{EV} \leq x_{t,k}^{EV} \overline{P}^{EVSE}, \quad \forall k, \forall t$$

Also, electric vehicles are charged in between their arrival and departure times. This condition is expressed as

$$x_{t,k}^{EV} = 0, \quad \forall k, \forall t < \underline{t}_k \ \& \ t > \overline{t}_k$$

The maximum power available for charging all electric vehicles is introduced as

$$\sum_k P_{t,k}^{EV} \leq \overline{P}^{EVSE,Total}, \quad \forall t$$

The equations describing flexibility for providing positive balancing power then read

$$\sum_t \eta^{EVSE} \left( P_{t,k}^{EV} - P_{t,k}^{EV,Flex,+} \right) \Delta t \leq \overline{E}_k^{EV}, \quad \forall k$$

$$\sum_k \left( x_{t,k}^{EV} + x_{t,k}^{EV,Flex,+} \right) \leq n^{EVSE}, \quad \forall t$$

$$x_{t.k}^{EV,Flex,+} = 1 \Rightarrow x_{t,k}^{EV} = 0, \quad \forall t, \quad \forall k$$

$$x_{t.k}^{EV} \underline{P}^{EVSE} \leq P_{t,k}^{EV} - P_{t,k}^{EV,Flex,+} \leq x_{t,k}^{EV} \overline{P}^{EVSE}, \quad \forall k, \forall t$$

$$x_{t.k}^{EV,Flex,+} \underline{P}^{EVSE} \leq -P_{t,k}^{EV,Flex,+} \leq x_{t,k}^{EV,Flex,+} \overline{P}^{EVSE}, \quad \forall k, \forall t$$

$$x_{t,k}^{EV,Flex,+} = 0, \quad \forall k, \forall t < \underline{t}_k \, \& \, t > \overline{t}_k$$

$$\sum_k \left( P_{t,k}^{EV} - P_{t,k}^{EV,Flex,+} \right) \leq \overline{P}^{EVSE,Total}, \quad \forall t .$$

Likewise, one obtains the following expressions for providing negative balancing power

$$\sum_t \eta^{EVSE} \left( P_{t,k}^{EV} + P_{t,k}^{EV,Flex,-} \right) \Delta t \leq \overline{E}_k^{EV}, \quad \forall k$$

$$\sum_k \left( x_{t,k}^{EV} - x_{t,k}^{EV,Flex,-} \right) \leq n^{EVSE}, \quad \forall t$$

$$x_{t.k}^{EV,Flex,-} = 1 \Rightarrow x_{t,k}^{EV} = 1, \quad \forall t, \quad \forall k$$

$$x_{t.k}^{EV} \underline{P}^{EVSE} \leq P_{t,k}^{EV} + P_{t,k}^{EV,Flex,-} \leq x_{t,k}^{EV} \overline{P}^{EVSE}, \quad \forall k, \forall t$$

$$x_{t.k}^{EV,Flex,-} = 1 \Rightarrow P_{t,k}^{EV} + P_{t,k}^{EV,Flex,-} = 0, \quad \forall k, \forall t$$

$$x_{t,k}^{EV,Flex,-} = 0, \quad \forall k, \forall t < \underline{t}_k \, \& \, t > \overline{t}_k$$

$$\sum_k \left( P_{t,k}^{EV} + P_{t,k}^{EV,Flex,-} \right) \leq \overline{P}^{EVSE,Total}, \quad \forall t .$$

It is envisaged that planning module according to this disclosure also accounts for power factors of loads. In a particular embodiment, a liner relationship between a power factor and active power is assumed. That is, the power factor will vary between a first percentage a for $P^{Load} = \overline{P}^{Load}$ and a second percentage b for $P^{Load} = \underline{P}^{Load}$, with a larger than or equal to b. Power factors are taken into consideration by differentiating between active power and reactive power as follows

$$\left( P_t^{Load} \right)^2 = \left( \frac{a-b}{\overline{P}^{Load} - \underline{P}^{Load}} \left( P_t^{Load} - \overline{P}^{Load} \right) + a \right)^2 \left( \left( P_t^{Load} \right)^2 + \left( Q_t^{Load} \right)^2 \right), \quad \forall t$$

It should further be noted that a planning module of a power management apparatus needs to account for the general constraints of the system. The general constraints include conservation of energy in terms of active power

$$P_t^B + P_t^{S,IN} + \sum_k P_{t,k}^{EV} + \sum_j P_t^{HVAC,j} + x_t^{STL} P^{STL} - P_t^{PV} - P_t^{S,OUT} = P_t^G \quad \forall t$$

and in terms of reactive power

$$Q_t^S + Q_t^{STL} + Q_t^{PV} + Q_t^{HVAC} = Q_t^G \quad \forall t .$$

Peak power is also limited:

$$P_{max}^G \geq P_t^G - P_{max}^{G,Estimate} \quad \forall t .$$

In addition, constraints apply to positive balancing power

$$P_\tau^{Flex,+} \leq P_t^{PV,Flex,+} + P_t^{S,Flex,+} + P_t^{HVAC,Flex,+} + P_t^{STL,Flex,+} \quad \forall \tau, \quad \forall t \in [\tau, \tau+1)$$

and to negative balancing power

$$P_\tau^{Flex,-} \leq P_t^{PV,Flex,-} + P_t^{S,Flex,-} + P_t^{HVAC,Flex,-} + P_t^{STL,Flex,-} \quad \forall \tau, \quad \forall t \in [\tau, \tau+1) .$$

Further, control variables involve temporal smoothing due to the charging power of electric storage.

$$-\Delta P^{S,IN} \leq P_{t+1}^{S,IN} - P_t^{S,IN} \leq \Delta P^{S,IN} .$$

Eventually, the power management apparatus may procure energy from the market. The objective function that corresponds to procurement of energy depends on the applicable tariff. It is envisaged that the power management apparatus acquires information on tariffs from a power company and / or from an aggregator via a network connection. The tariff may, by way of non-limiting example, be a Swiss band tariff. The objective function then reads

$$\min \sum_t c_t^{Band,E,+} P_t^{Band,+} \Delta t + \sum_t c_t^{Band,E,-} P_t^{Band,-} \Delta t$$
$$- \sum_\tau c_\tau^{Flex,P,+} P_\tau^{Flex,+} - \sum_\tau c_\tau^{Flex,P,-} P_\tau^{Flex,-} .$$

$$\min \sum_t c_t^G P_t^G \Delta t + c_{max}^G P_{max}^G$$
$$- \sum_\tau c_\tau^{Flex,P,+} P_\tau^{Flex,+} - \sum_\tau c_\tau^{Flex,P,-} P_\tau^{Flex,-} .$$

The power drawn from the grid must also meet requirements in view of band position:

$$P_t^{Band,+} \geq P_t^G - P^{Band}, \quad \forall t$$

$$P_t^G = P_t^{Band,+} + P_t^{Band,-}, \quad \forall t$$

$$P_t^{Band,-} \leq P^{Band}, \quad \forall t$$

$$P_t^{Band,+}, P_t^{Band,-} \geq 0, \quad \forall t \qquad .$$

In an alternate embodiment, the tariff is a Swiss daytime/night-time tariff. An adequate objective function then is

In an alternate embodiment, the objective function describes penalization of carbon dioxide footprint rather than a tariff applicable to the procurement of energy. In this case, the objective function may, by way of non-limiting example, be a measure of carbon dioxide footprint, a measure of carbon dioxide emissions, and/or a measure of carbon dioxide equivalents. Carbon dioxide equivalents compare the emissions from various greenhouse gases such as sulfur hexafluoride upon their global warming potential.

Estimation of flexibility values and of load profiles as well as scheduling of loads is typically done one day ahead. The corresponding time span runs from 0:00 h to 24:00 h. The planning and the scheduling are usually completed before 12:00 h. It is envisaged that planning and scheduling are repeated in the afternoon to obtain more precise estimates of load profiles and more accurate schedules.

The present disclosure provides a planning module that accomplishes the tasks of optimum load profiles and of (indirect) participation in energy markets. In addition, a planning module of a power management apparatus as disclosed herein can adapt to various configurations of building infrastructure. The application of the presently disclosed planning module is not limited to power management systems. The planning module may actually also form part of an automation system for industry purposes. Further, the planning module can be configured to apply to forms of energy other than electric energy such as heat, steam, pressurized air, and/or gas.

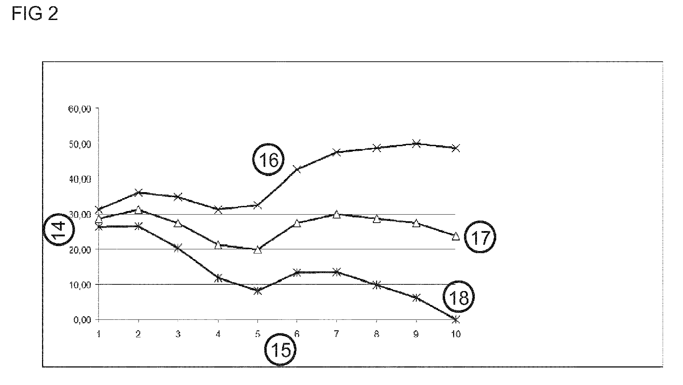

FIG 2 depicts by way of non-limiting example the maximum flexibility of a particular storage unit with a capacity of 50 kWh. The capacity of the storage unit is plotted along the vertical axis 14 of FIG 2. Ten subsequent time intervals of fifteen minutes length are plotted along the horizontal axis 15. The uppermost curve 16 of FIG 2 shows the negative balancing power associated with the storage device. The second curve 17 from the top gives the actual level of energy storage as measured in kWh. The lowermost curve 18 of FIG 2 shows positive balancing power of the storage device.

The planning module of this disclosure is configured to deliver a time profile 17 of the storage level of the unit. The time profile 17 as shown on FIG 2 complies with the technical constraints of minimum (0 kWh) and of maximum (50 kWh) storage of energy. The non-limiting example of FIG 2 allows for an extra consumption of 10 kW and for a reduction in consumption by 9.5 kW. The profiles of FIG 2 are based on an assumption that values of flexibility must be available as indicated at all time intervals.

Building infrastructure typically involves the following components other than storage devices:

1. Photovoltaic installations or similar power generation units: The maximum of power generation through photovoltaic installations is determined by the forecast value of incident solar radiation. This maximum of power generation is an upper limit of power to be supplied to the grid by an inverter. The power supplied by the inverter may actually be curtailed to zero. Consequently, an inverter has to feed the grid at its maximum power to provide maximum flexibility for increasing the power consumption of a site. By contrast, the inverter needs be curtailed to zero to achieve maximum flexibility for reducing the power consumption of a site. With an inverter set anywhere between 0% and 100%, flexibility is provided in either direction, i.e. both for decreasing and for increasing power consumption.

2. Variable loads such as electric cars, heating, ventilation, air-conditioning systems, refrigeration units: Loads inside a building may vary either by setting their mode of operation or by setting their power consumption either continuously or in steps. The planning module needs to factor in technical constraints such as the rating of a charging point for electric vehicles and the rating of a heating, ventilation, air-conditioning system. The planning module also accounts for comfort constraints such as minimum and maximum temperatures allowable inside a building with a heating, ventilation, air-conditioning system. Any margins that apply to the control of these loads may be used to determine the flexibility of a site as regards increases or decreases in consumption. A temperature inside a building that is below its upper limit may, for instance, be used to increase power consumption by heating. Similarly, an air-conditioning unit may be switched off or its power consumption may lower whenever no room of a building reaches its maximum allowable temperature.

In a particular embodiment, the planning module of this disclosure is also configured to stress-test anticipated load profiles and/or anticipated values of flexibility. To that end, the planning module of this disclosure is configured to analyze the influence of changes of inside and/or of outside temperature on the load profiles. The planning module may also analyse influences of parameters other than temperature (such as incident solar radiation) on load profiles and/or on (guaranteed) flexibility. A mixed-integer algorithm (as set forth above) may be employed for stress-testing. The planning module may, in particular, not only stress-test a particular building, but also a building in conjunction with the power grid. That way, a planning module of this disclosure contributes to the stability of its own power supply and/or to the stability of the power grid.

It is envisaged that the planning module according to the instant disclosure comprises a memory, in particular a nonvolatile memory, for reading parameters and for storing results of computations. It is also envisaged that the planning module according to the instant disclosure comprises a processing unit that carries out the above optimizations. It is further envisaged that the planning module according to the instant disclosure provides a wireless or a wired network connection in order for the planning module to communicate with other components of a system. The memory and / or the processing unit and / or the network connection may actually be shared with a superordinate power management system or apparatus. The memory and / or the processing unit and / or the network connection may also be shared with a superordinate energy management system or apparatus.

In other words, the instant disclosure teaches a building management apparatus of a building management apparatus for a site with a base load and with at least one variable load 13, wherein the planning module is configured to read a set of parameters, wherein the set of parameters comprises a set of parameters of the at least one base load of the site, and a set of parameters of the at least one variable load 13 of the site, wherein the set of parameters of the at least one variable load 13 also comprises at least one technical constraint applicable to the at least one variable load 13, wherein the set of parameters also comprises at least one objective function selected from a tariff describing the cost of procurement of energy for the site and a measure of carbon dioxide footprint, and combinations thereof; wherein the planning module is configured to apply an optimization algorithm to obtain and to output at least one load profile for the site, wherein the planning module is configured to apply an optimization algorithm to obtain and to output an optimum schedule for the at least one variable load 13 such that the cost for the procurement of energy for the site is minimized in accordance with said tariff and such that the optimum schedule complies with the at least one technical constraint that applies to the at least one variable load 13, and wherein the planning module is configured to send said optimum schedule to another module 5, 12 of the building management apparatus, and wherein said another module 5, 12 is configured to control supply of power to the at least one variable load 13 of the site in accordance with said optimum schedule.

The other module 5, 12 of the building management apparatus is preferably part of the automation layer 5 or of the field layer 12 of the building management apparatus.

The instant disclosure also teaches a building management apparatus, wherein the planning module is also configured to apply the optimization algorithm to obtain and to output values of flexibility for the site.

The instant disclosure further teaches a building management apparatus, wherein the planning module is configured to apply an optimization algorithm to obtain and to output at least one load profile for the at least one variable load 13.

The instant disclosure also discloses a planning module, wherein the site is a building, in particular, a commercial, residential and/or industrial building.

The instant disclosure further teaches a building management apparatus, wherein the optimization algorithm is a mixed-integer algorithm.

The instant disclosure also teaches a building management apparatus, wherein the site is an automation system for industrial purposes.

The instant disclosure further discloses a planning module, wherein the set of parameters also comprises parameters of a power generation unit 13 installed on-site.

The instant disclosure still teaches a building management apparatus, wherein the power generation unit 13 is a photovoltaic installation.

The instant disclosure still further teaches a building management apparatus, wherein the set of parameters also comprises parameters of an energy storage unit 13 installed on-site.

The instant disclosure also teaches a building management apparatus, wherein the at least one variable load 13 is a charging point for an electric vehicle and/or is a heating, air-conditioning, ventilation system.

The instant disclosure further teaches a building management apparatus, wherein the set of parameters for the at least one variable load 13 also comprises at least one comfort constraint applicable to the at least one variable load 13.

The instant disclosure also discloses a planning module, wherein the planning module is configured to obtain and to output an optimum schedule for the at least one variable load 13, such that the optimum schedule also complies with at least one comfort constraint that applies to the at least one variable load 13.

The present disclosure further teaches a building management apparatus, wherein the parameters of the at least one variable load 13 comprise power consumption in dependence on a mode of operation of the at least one variable load 13 and/or continuous or discontinuous values of power consumption of the at least one variable load 13.

The instant disclosure also teaches a method for managing power for a site with a base load and with at least one variable load 13, the method comprising the steps of a planning module reading a set of parameters, wherein the set of parameters comprises at least one base load of the site, and at least one variable load 13 of the site, wherein the parameters of the at least one variable load also comprises at least one technical constraint applicable to the at least one variable load 13, wherein the set of parameters also comprises at least one objective function selected from a tariff describing the cost of procurement of energy for the site and a measure of carbon dioxide footprint, and combinations thereof; the planning module applying an optimization algorithm to obtain and to output at least one load profile for the site, the planning module applying an optimization algorithm to obtain and to output an optimum schedule for the at least one variable load 13 such that the cost for the procurement of energy for the site is minimized and such that the optimum schedule complies with the at least one technical constraint that applies to the at least one variable load 13, the planning module sending said optimum schedule to another module

5, 12 of a building management apparatus, said another module 5, 12 controlling supply of power to the at least one load 13 of the site in accordance with said optimum schedule.

The instant disclosure further teaches a non-transitory, tangible computer readable medium having instructions executable by a processor for performing the aforementioned method when said instructions are executed.

The instant disclosure still further teaches building management apparatus for a site with base load and with at least one variable load 13, the building management system comprising a planning module according to the instant disclosure and a plurality of further components 5, 12, wherein at least one of said components 5, 12 is configured to control supply of power, preferably to supply power and to stop supply of power, to the at least one variable load 13 of the site in accordance with said optimum schedule and wherein said planning module is configured to connect to, preferably to communicate with, the at least one of said components 5, 12.

Any steps of a method according to the present application may be embodied in hardware, in a software module executed by a processor, in a cloud computing arrangement, or in a combination of these. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other information technology equipment and appliance.

It should be understood that the foregoing relates only to certain embodiments of the invention and that numerous changes may be made therein without departing from and the scope of the invention as defined by the following claims. It should also be understood that the invention is not restricted to the illustrated embodiments and that various modifications can be made within the scope of the following claims.

Reference numerals

    1 management layer
    2, 3, 4 visualisation nodes
    5 automation layer
    6, 7, 8, 9 individual devices grouped on the automation layer
    10, 11 groups of devices controlled on the automation layer
    12 field layer
    13 various components of infrastructure
    14 energy storage
    15 time in intervals of a quarter of an hour
    16 flexibility for providing negative balancing power
    17 storage level of energy
    18 flexibility for providing positive balancing power

**Claims**

1.  A building management apparatus for a site with a base load and with at least one variable load (13), the building management apparatus comprising a planning module and plurality of other modules (2 - 5, 12),
    wherein the planning module is configured to read a set of parameters,
    wherein the set of parameters comprises a set of parameters of the at least one base load of the site, and a set of parameters of the at least one variable load (13) of the site,

wherein the set of parameters of the at least one variable load (13) also comprises at least one technical constraint applicable to the at least one variable load (13),

wherein the set of parameters also comprises at least one objective function selected from a tariff describing the cost of procurement of energy for the site and a measure of carbon dioxide footprint, and combinations thereof;

**characterized in that**

the planning module is configured to apply an optimization algorithm to obtain and to output at least one load profile for the site, and **in that**

the planning module is configured to apply an optimization algorithm to obtain and to output an optimum schedule for the at least one variable load (13)

such that the cost for the procurement of energy for the site is minimized in accordance with said tariff and

such that the optimum schedule complies with the at least one technical constraint that applies to the at least one variable load (13), and **in that**

the planning module is configured to send said optimum schedule to another module (5, 12) of the building management apparatus, and **in that**

said another module (5, 12) is configured to control supply of power to the at least one variable load (13) of the site in accordance with said optimum schedule.

2. The building management apparatus according to claim 1, wherein the planning module is also configured to apply the optimization algorithm to obtain and to output values of flexibility for the site.

3. The building management apparatus according to any of the claims 1 to 2, wherein the planning module is configured to apply an optimization algorithm to obtain and to output at least one load profile for the at least one variable load (13).

4. The building management apparatus according to any of the claims 1 to 3, wherein the site is a building, in particular, a commercial, residential and/or industrial building.

5. The building management apparatus according to any of the claims 1 to 4, wherein the optimization algorithm is a mixed-integer algorithm.

6. The building management apparatus according to any of the claims 1 to 5, wherein the site is an automation system for industrial purposes.

7. The building management apparatus according to any of the claims 1 to 6, wherein the set of parameters also comprises parameters of a power generation unit (13) installed on-site.

8. The building management apparatus according to claim 7, wherein the power generation unit is a photovoltaic installation.

9. The building management apparatus according to any of the claims 1 to 8, wherein the set of parameters also comprises parameters of an energy storage unit installed on-site.

10. The building management apparatus according to any of the claims 1 to 9, wherein the at least one variable load (13) is a charging point for an electric vehicle and/or is a heating, air-conditioning, ventilation system.

11. The building management apparatus according to any of the claims 1 to 10, wherein the set of parameters for the at least one variable load (13) also comprises at least one comfort constraint applicable to the at least one variable load (13).

12. The building management apparatus according to claim 10, wherein the planning module is configured to obtain and to output an optimum schedule for the at least one variable load (13) such that the optimum schedule also complies with at least one comfort constraint that applies to the at least one variable load (13).

13. The building management apparatus according to any of the claims 1 to 12, wherein the parameters of the at least one variable load (13) comprise power consumption in dependence on a mode of operation of the at least one variable load (13) and/or continuous or discontinuous values of power consumption of the at least one variable load (13).

14. A method for managing power for a site with a base load and with at least one variable load (13), the method comprising the steps of

a planning module reading a set of parameters,

wherein the set of parameters comprises at least one base load of the site, and at least one variable load (13) of the site,

wherein the parameters of the at least one variable load also comprises at least one technical constraint applicable to the at least one variable load (13),

wherein the set of parameters also comprises at least one objective function selected from a tariff describing the cost of procurement of energy for the site and a measure of carbon dioxide footprint, and combinations thereof;

**characterized in that**

the planning module applying an optimization algorithm to obtain and to output at least one load profile for the site,

the planning module applying an optimization algorithm to obtain and to output an optimum schedule for the at least one variable load (13)

such that the cost for the procurement of energy for the site is minimized and

such that the optimum schedule complies with the at least one technical constraint that applies to the at least one variable load (13),

the planning module sending said optimum schedule to another module (5, 12) of a building management apparatus, and **in that**

said another module (5, 12) controlling supply of power to the at least one variable load (13) of the site in accordance with said optimum schedule.

**15.** A non-transitory, tangible computer readable medium having instructions executable by a processor for performing the method according to claim 14 when said instructions are executed.

FIG 1 prior art

FIG 2

Europäisches
Patentamt

European
Patent Office

Office européen
des brevets

**EUROPEAN SEARCH REPORT**

Application Number

EP 15 17 8357

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 675 112 A1 (ABB RESEARCH LTD [CH]) 18 December 2013 (2013-12-18) * abstract; claims 1-6; figures 1-2 * ----- | 1-15 | INV. G06Q50/06 |
| X | US 2011/087904 A1 (LEE YU-LUNG [TW] ET AL) 14 April 2011 (2011-04-14) * abstract; claims 1, 2; figures 2, 4, 5 * ----- | 1-15 | |

TECHNICAL FIELDS
SEARCHED       (IPC)

G06Q

The present search report has been drawn up for all claims

| Place of search | Date of completion of the search | Examiner |
|---|---|---|
| Munich | 28 August 2015 | Viets, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 17 8357

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2015

| Patent document cited in search report | | Publication date | Patent family member(s) | | Publication date |
|---|---|---|---|---|---|
| EP 2675112 | A1 | 18-12-2013 | NONE | | |
| US 2011087904 | A1 | 14-04-2011 | TW | 201113689 A | 16-04-2011 |
| | | | US | 2011087904 A1 | 14-04-2011 |

EPO FORM P0459

For more details about this annex : see Official Journal of the European Patent Office, No. 12/82

**EP 2 993 640 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011087904 A1